(19) Europäisches Patentamt
European Patent Office
Office européen des brevets

(11) EP 4 742 520 A1

(12) DEMANDE DE BREVET EUROPEEN

(43) Date de publication:
13.05.2026 Bulletin 2026/20

(51) Classification Internationale des Brevets (IPC):
H02M 1/00 (2006.01)    H02M 3/07 (2006.01)

(21) Numéro de dépôt: 25214268.2

(22) Date de dépôt: 07.11.2025

(52) Classification Coopérative des Brevets (CPC):
H02M 1/0048; H02M 1/0045; H02M 3/072;
H02M 3/073

(84) Etats contractants désignés:
AL AT BE BG CH CY CZ DE DK EE ES FI FR GB
GR HR HU IE IS IT LI LT LU LV MC ME MK MT NL
NO PL PT RO RS SE SI SK SM TR
Etats d'extension désignés:
BA
Etats de validation désignés:
GE KH LA MA MD TN

(30) Priorité: 08.11.2024 FR 2412292

(72) Inventeurs:
• BECHET, Gwenael
38054 GRENOBLE Cedex 9 (FR)
• BERAUD-SUDREAU, Quentin
38054 GRENOBLE Cedex 9 (FR)

(74) Mandataire: Germain Maureau
12, rue Boileau
69006 Lyon (FR)

(71) Demandeur: Commissariat à l'Energie Atomique
et aux Energies
Alternatives
75015 Paris (FR)

(54) SYSTÈME DE POMPE DE CHARGE RECONFIGURABLE AUTOMATIQUEMENT

(57) Système de pompe de charge (100) comprenant :
- une pompe de charge (1) comprenant un nombre d'étages de pompe, chaque étage de pompe étant configuré pour être activé ou désactivé,
- un régulateur de tension (LDO) connecté à la pompe de charge (1)
- un dispositif d'activation configuré pour :
- obtenir un résultat de prédiction correspondant à une différence entre une tension de prédiction (Vcp+1) représentative d'une modification du nombre d'étages de pompe (Si) activés et une tension de sortie de régulateur (Vldo),
- modifier ou non le nombre d'étages N de pompe (Si) activés en fonction du résultat de prédiction obtenu, de sorte à modifier ou non la tension de sortie de pompe (Vcp) pour que la différence entre la tension de sortie de pompe (Vcp) et la tension de sortie de régulateur (Vldo) soit régulée et comprise dans une gamme de tension de fonctionnement prédéfinie.

FIG. 1

EP 4 742 520 A1

# EP 4 742 520 A1

## Description

### Domaine technique

L'invention concerne la conversion d'énergie dans les circuits électroniques intégrés. En particulier, l'invention concerne un système de pompe de charge comprenant notamment une pompe de charge, un régulateur de tension et un circuit de prédiction.

### Technique Antérieure

Un régulateur de tension linéaire ou "Low Dropout Regulator" dans la terminologie anglo-saxonne est un dispositif électronique qui maintient une tension de sortie constante malgré des variations de la tension d'entrée. Contrairement aux régulateurs à découpage, les régulateurs de tension linéaire sont appréciés pour leur simplicité de conception, leur faible bruit électrique et leur réponse rapide aux changements de charge, ce qui les rend adéquats pour des applications sensibles.

Une pompe de charge est un circuit électronique qui convertit une tension d'entrée en une tension de sortie plus élevée ou plus basse en utilisant des commutateurs et des condensateurs. La pompe de charge est souvent utilisée pour générer une tension requise de manière efficace dans un système sans avoir besoin de transformateurs ou d'inducteurs.

Une pompe de charge peut être utilisée pour alimenter un régulateur de tension. La pompe de charge fournit ainsi une tension d'alimentation ajustée au régulateur de tension. La pompe de charge peut augmenter ou diminuer la tension d'entrée pour qu'elle soit plus proche de la tension de sortie souhaitée par le régulateur de tension. Cela permet au régulateur de tension de fonctionner plus efficacement, car la différence entre la tension d'entrée et la tension de sortie est réduite, minimisant ainsi les pertes de puissance et améliorant le rendement global du système.

Un régulateur de tension linéaire reçoit une tension d'entrée et régule cette tension d'entrée pour fournir une tension de sortie stable. Une référence interne ou externe au régulateur de tension linéaire appelée tension de contrôle détermine la valeur de la tension de sortie. Le régulateur de tension linéaire compare la tension de contrôle à la tension de sortie via un réseau de rétroaction, et ajuste la tension de sortie de manière à minimiser l'erreur entre la tension de contrôle et la tension ayant fait l'objet d'une contre-réaction.

Le mode de fonctionnement du régulateur de tension linéaire, qu'il soit en régulation ou en régime linéaire, dépend de la relation entre la tension d'alimentation et la tension de sortie. Lorsque la tension d'alimentation est suffisamment supérieure à la tension de sortie, le régulateur de tension linéaire fonctionne efficacement en régulation. Si la tension d'alimentation diminue en dessous d'un seuil donné et se rapproche de la tension de sortie, le régulateur de tension linéaire peut entrer en mode linéaire, où la régulation de tension et la rejection de bruit sont dégradés, génère plus de chaleur et le rendement du système se dégrade.

La tension de contrôle du régulateur linéaire est essentielle pour cette dynamique. Si la tension de contrôle change, par exemple, en diminuant du fait d'un changement de température dans le milieu environnant, le régulateur de tension linéaire doit ajuster la tension de sortie en conséquence. Si le régulateur de tension linéaire ne parvient pas à maintenir la différence nécessaire entre la tension d'alimentation et la tension de sortie, le régulateur de tension linéaire risque de fonctionner en mode linéaire, dégradant ainsi les performances du système.

Il est connu de l'état de la technique de maintenir le régulateur de tension linéaire dans sa zone de fonctionnement en régulation en choisissant une tension d'entrée statique et satisfaisante pour la valeur la plus haute de la tension de sortie à adresser. Néanmoins, dans ce cas le rendement global pour des tensions de sorties basses est sous-optimisé. De plus, cette solution n'est pas adaptée lorsque la tension d'entrée elle-même varie dans le temps.

Le but de la présente invention est de pallier l'inconvénient présenté ci-dessus et de permettre un fonctionnement en régulation du régulateur de tension linéaire qui ne soit pas influencé par les variations de la tension de contrôle ou de la tension d'entrée.

### Résumé de l'invention

La présente invention concerne un système de pompe de charge comprenant :

- une pompe de charge connectée entre une borne d'entrée et une borne de référence à une alimentation d'entrée externe au système de pompe de charge pour recevoir une tension d'alimentation d'entrée et pour générer, en fonction de la tension d'alimentation d'entrée, en sortie de la pompe de charge entre une borne de sortie et la borne de référence, une tension de sortie de pompe, la pompe de charge comprenant un nombre Nmax d'étages de pompe, et chaque étage de pompe étant configuré pour être activé ou désactivé, le nombre d'étage N de pompe activé étant compris entre 0 et Nmax,
- un régulateur de tension connecté à la pompe de charge entre la borne de sortie et la borne de référence, et configuré pour recevoir la tension de sortie de pompe en entrée dudit régulateur de tension et pour générer, sur la base de la tension de sortie de pompe, une tension de sortie de régulateur,

- un dispositif d'activation configuré pour :

  - obtenir un résultat de prédiction correspondant à une différence entre une tension de prédiction représentative d'une modification du nombre d'étages de pompe activés et la tension de sortie de régulateur,
  - modifier ou non le nombre d'étages N de pompe activés en fonction du résultat de prédiction obtenu, de sorte à modifier ou non la tension de sortie de pompe pour que la différence entre la tension de sortie de pompe et la tension de sortie de régulateur soit régulée et comprise dans une gamme de tension de fonctionnement prédéfinie.

De manière avantageuse, alimenter le régulateur de tension par une pompe de charge permet d'améliorer un rendement du système de pompe de charge par rapport à une alimentation du régulateur de tension directement à partir de la source d'alimentation qui fournit la tension d'alimentation d'entrée.

Grâce aux dispositions selon l'invention, on obtient un circuit de reconfiguration automatique de la pompe de charge. Le système de pompe de charge permet de prendre en compte les variations de la tension d'entrée ou de la tension de référence.

Selon un mode de réalisation, la gamme de tensions de fonctionnement ou gamme de tension prédéterminée est comprise entre un seuil bas et un seuil haut.

Selon une possibilité, la pompe de charge est de type abaisseuse, comprenant en outre un circuit de prédiction configuré pour générer ladite tension de prédiction en sortie du circuit de prédiction.

Selon une possibilité, le circuit de prédiction est configuré pour générer ladite tension de prédiction en sortie du circuit de prédiction à partir d'au moins une tension intermédiaire présente dans ladite pompe de charge en sortie des étages de ladite pompe de charges.

Selon une autre possibilité, le circuit de prédiction est configuré pour générer ladite tension de prédiction en sortie du circuit de prédiction à partir d'au moins une tension d'entrée ou de sortie de la pompe de charge.

Ces dispositions sont adaptées à l'utilisation avec une pompe de charge abaisseuse. En effet, il convient dans ce cas de prédire l'évolution de la tension dans le cas d'une augmentation du nombre d'étages, car la tension correspondant au nombre d'étages correspondant à une augmentation n'est pas disponible aux bornes de l'un des étages activés de la pompe de charge.

Selon une possibilité, la tension de prédiction est représentative d'une modification du nombre d'étages de pompe activés correspondant à un nombre d'étages supérieur à un nombre d'étage activé courant de la pompe de charge.

Selon une possibilité, chaque étage de pompe est configuré pour recevoir en entrée une tension intermédiaire d'entrée et pour générer en sortie dudit étage de pompe, sur la base de la tension intermédiaire d'entrée, une tension intermédiaire de sortie, le circuit de prédiction est configuré pour prélever une pluralité de tensions intermédiaires d'entrée ou de sortie, et le circuit de prédiction comprend :

- un multiplexeur configuré pour sélectionner une tension intermédiaire d'entrée parmi les tensions intermédiaires d'entrée prélevées,
- au moins un étage de modification configuré pour générer une tension de prédiction sur la base de la tension intermédiaire sélectionnée, l' au moins un étage de modification étant configuré pour présenter un structure identique à un étage de pompe de la pompe de charge.

De manière avantageuse, le circuit de prédiction comprenant un multiplexeur permet de prélever une pluralité de tensions intermédiaires de sortie à différents nœuds de la pompe de charge, permettant ainsi de varier la tension en entrée du circuit de prédiction.

Selon une possibilité, la tension intermédiaire d'entrée d'un étage de pompe de rang i+1 correspond à la tension intermédiaire de sortie d'un étage de pompe de rang i, le rang i étant compris entre 1 et Nmax.

Selon un mode de réalisation, La sélection réalisée par le multiplexeur est commandée par le dispositif d'activation et correspond au nombre d'étage activé N.

Selon un mode de réalisation, au moins un étage de modification est configuré pour présenter une structure similaire à un étage de pompe de la pompe de charge

Ainsi, l'étage de modification simule le comportement d'un étage de pompe car il présente une structure similaire ou identique comprenant les mêmes composants.

Selon un mode de réalisation, l'étage de modification reçoit les mêmes commandes d'activation qu'un étage de pompe de la pompe de charge qu'il simule.

Selon une possibilité, chaque étage de pompe est configuré pour recevoir en entrée une tension intermédiaire d'entrée et pour générer en sortie dudit étage de pompe, sur la base de la tension intermédiaire d'entrée, une tension intermédiaire de sortie, le circuit de prédiction comprenant :

- un pont diviseur de tension résistif connecté entre une première borne choisie entre la borne de sortie et la borne d'entrée et une deuxième borne correspondant à la borne de référence, le pont diviseur de tension résistif comprenant une pluralité de composants résistifs, chaque composant résistif étant configuré de sorte que la tension aux bornes de chaque composant résistif corresponde à la tension intermédiaire d'entrée ou la tension intermédiaire de sortie de l'étage de pompe correspondant,
- un multiplexeur connecté aux bornes d'au moins un composant résistif de la pluralité de composants résistifs et configuré pour sélectionner une tension parmi les tensions aux bornes des composants résistifs, la tension sélectionnée correspondant à la tension de prédiction.

De manière avantageuse, le système de pompe de charge comprenant le pont diviseur de tension résistif réduit de 20% l'encombrement par rapport au système de pompe de charge à division capacitive.

Selon un mode de réalisation, la sélection réalisée par le multiplexeur est commandée par le dispositif d'activation et correspond au nombre d'étage activé N.

Selon une possibilité, chaque composant résistif présente entre les bornes dudit composant résistif une valeur de résistance définie en fonction du nombre d'étage(s) de pompe activé(s).

De manière avantageuse, il est possible d'agir sur le nombre d'étage de pompe activé pour modifier la valeur de la résistance du composant résistif.

Selon une possibilité, ladite pompe de charge est de type abaisseuse, et le dispositif d'activation est configuré pour :

- mesurer une première différence de tension entre la tension courante de sortie de pompe et la tension de sortie de régulateur,
- si ladite première différence est inférieure à un seuil bas, modifier le nombre d'étages de pompe activé en réduisant ledit nombre d'étages de pompe activés N,
- - si ladite première différence est supérieure à un seuil haut obtenir ledit résultat de prédiction correspondant à une deuxième différence entre la tension de prédiction et la tension de sortie de régulateur, et si le résultat de prédiction est supérieur au seuil bas, modifier le nombre d'étages de pompe activé en augmentant ledit nombre d'étages de pompe activé et
- maintenir inchangé le nombre d'étages de pompe activés N si la première différence est comprise entre le seuil bas et le seuil haut.

Selon une possibilité, ladite pompe de charge est de type élévatrice, et dans lequel la tension de prédiction est une tension de nombre d'étages inférieur représentative d'une modification du nombre d'étages de pompe activés correspondant à un nombre d'étages inférieur à un nombre d'étage activé courant de la pompe de charge, le résultat de prédiction correspondant à un résultat de nombre d'étages inférieur.

Ces dispositions sont adaptées à l'utilisation d'une pompe de charge élévatrice. Dans ce cas la tension de nombre d'étages inférieur peut être obtenue au bornes d'un étage de la pompe de charge.

Selon une possibilité, le dispositif d'activation est configuré pour :

- mesurer une première différence de tension entre la tension courante de sortie de pompe et la tension de sortie de régulateur,
- si ladite première différence est inférieure à un seuil bas, modifier le nombre d'étages de pompe activé en augmentant ledit nombre d'étages de pompe activés N,),
- si ladite première différence est supérieure à un seuil haut obtenir une tension de nombre d'étages inférieur, et obtenir un résultat prédiction pour un nombre d'étage inférieur correspondant à une deuxième différence entre une tension de nombre d'étages inférieur et la tension de sortie de régulateur, et, si le résultat de prédiction est supérieur au seuil bas, modifier le nombre d'étages de pompe activé en diminuant ledit nombre d'étages de pompe activé,

maintenir inchangé le nombre d'étages de pompe activés N si ladite première différence est comprise entre le seuil bas et le seuil haut.

Selon une possibilité, le dispositif d'activation comprend un ensemble de comparateurs comprenant :

- Un premier comparateur configuré pour recevoir en entrée la tension de sortie de pompe, la tension de sortie de régulateur ainsi que le seuil bas et pour comparer la différence entre la tension de sortie de pompe et la tension de sortie de régulateur avec le seuil bas,
- Un deuxième comparateur configuré pour recevoir en entrée la tension de sortie de pompe, la tension de sortie de régulateur ainsi que le seuil haut et pour comparer la différence entre la tension de sortie de pompe et la tension de sortie de régulateur avec le seuil haut, et

- Un troisième comparateur configuré pour recevoir en entrée la tension de prévision, la tension de sortie de régulateur ainsi que le seuil bas et pour comparer la différence entre la tension de prédiction et la tension de sortie de régulateur avec le seuil bas.

Selon une possibilité, le dispositif d'activation comprend une machine à état qui stocke dans une mémoire un nombre N d'étages activé et est configurée pour modifier ce nombre,

Selon une possibilité, chaque étage de pompe de rang i comprend un composant capacitif comprenant une première électrode reliée d'une part à une entrée de l'étage de pompe, et d'autre part reliée par un premier commutateur à l'entrée de l'étage de pompe de rang i+1 ou la tension de sortie ; et une deuxième électrode reliée d'une part par un deuxième interrupteur à la borne de sortie et d'autre part par un troisième commutateur Int3-i à la borne de référence.

De manière avantageuse, l'utilisation de commutateurs permet de modifier la configuration de la pompe de charge de manière simple et programmée afin de modifier la tension de sortie de pompe. Selon une possibilité, la pompe de charge est une pompe de charge de Dickson.

De manière avantageuse, l'utilisation d'une pompe de charge de Dickson permet de modifier la tension de sortie de pompe par rapport à la tension d'alimentation en entrée du système de pompe de charge en utilisant un nombre réduit de composants actifs, ce qui permet d'améliorer le rendement et la compacité du système de pompe de charge.

Selon une possibilité, le système de pompe de charge comprend en outre un microsystème électromécanique connecté en sortie du régulateur de tension entre la borne de référence et une borne de sortie du régulateur.

De manière avantageuse, le système de pompe de charge permet d'alimenter le microsystème électromécanique avec une tension stable, permettant au microsystème électromécanique d'avoir un fonctionnement fiable tout en réduisant les risques de dysfonctionnements ou de défaillances du microsystème électromécanique dues à des fluctuations de tension.

Selon une possibilité, le nombre n d'étages de pompe est compris entre 3 et 10, par exemple quatre étages de pompe.

Selon une possibilité, le nombre d'étages de pompe peut être choisi en fonction de la valeur de la tension de sortie de pompe désirée.

La présente invention concerne également un procédé de configuration d'un nombre d'étages de pompe activé pour un système de pompe de charge comprenant :

- une pompe de charge connectée entre une borne d'entrée et une borne de référence à une alimentation d'entrée externe au système de pompe de charge pour recevoir une tension d'alimentation d'entrée et pour générer, en fonction de la tension d'alimentation d'entrée, en sortie de la pompe de charge entre une borne de sortie et la borne de référence, une tension de sortie de pompe, la pompe de charge comprenant un nombre Nmax d'étages de pompe, et chaque étage de pompe étant configuré pour être activé ou désactivé, le nombre d'étage N de pompe activé étant compris entre 0 et Nmax, - un régulateur de tension connecté à la pompe de charge entre la borne de sortie et la borne de référence, et configuré pour recevoir la tension de sortie de pompe en entrée dudit régulateur de tension et pour générer, sur la base de la tension de sortie de pompe, une tension de sortie de régulateur,

le procédé comprenant les étapes suivantes :

- mesure d'une première différence de tension entre la tension de sortie de pompe et la tension de sortie de régulateur,

- si ladite première différence est inférieure à un seuil bas, opérer une première modification du nombre d'étages de pompe activé,
- si ladite première différence est supérieure à seuil haut, générer ou obtenir une tension de prédiction représentative d'une modification du nombre d'étages de pompe activés, et obtenir un résultat de prédiction correspondant à une deuxième différence entre la tension de prédiction et la tension de sortie de régulateur, et, si le résultat de prédiction est supérieur au seuil bas, opérer une deuxième modification du nombre d'étages de pompe activés, les première et deuxième modifications correspondant respectivement à une augmentation ou à une réduction, ou inversement,
- si ladite différence est comprise entre le seuil bas et le seuil haut, maintenir inchangé le nombre d'étages de pompe activés N.

Selon une possibilité, la première modification et la deuxième modification correspondent respectivement à une augmentation et à une réduction, ou inversement.

Selon une possibilité, ladite pompe de charge est de type abaisseuse, et :

- la première modification est une réduction du nombre d'étages activés,
- la deuxième modification est une augmentation du nombre d'étages de pompe activés,
- la tension de prédiction est obtenu par un circuit de prédiction.

Selon une possibilité, le circuit de prédiction apte à générer une tension de prédiction à partir d'au moins une tension intermédiaire présente dans ladite pompe de charge en sortie des étages de la pompe de charge.

Selon une possibilité, ladite pompe de charge est de type élévatrice, et :

- la première modification est une augmentation du nombre d'étages activés,
- la deuxième modification est une réduction du nombre d'étages de pompe activés,
- la tension de prédiction correspond à une tension d'un nombre d'étages inférieur.

## Brève description des figures

L'invention sera décrite en références aux figures suivantes qui sont données à titre indicatif et qui ne sont pas reproduites à l'échelle. Dans ces figures, les mêmes références désignent les mêmes éléments.

[Fig.1] la figure 1 présente un schéma-blocs d'un système de pompe de charge selon l'invention, dans le cas d'une pompe de charge abaisseuse.

[Fig.2] la figure 2 présente un exemple de pompe de charge dans une première phase de fonctionnement.

[Fig.3] la figure 3 présente un exemple de pompe de charge dans une seconde phase de fonctionnement.

[Fig.4] la figure 4 présente un premier mode de réalisation d'un circuit de prédiction pour un système de pompe de charge selon l'invention.

[Fig.5] la figure 5 présente un deuxième mode de réalisation d'un circuit de prédiction pour un système de pompe de charge selon l'invention.

[Fig.6] la figure 6 est un organigramme qui présente les étapes d'un procédé de configuration d'un nombre d'étages de pompe activé pour un système de pompe de charge abaisseuse.

[Fig.7] La figure 7 représente l'évolution de la tension de contrôle du LDO en fonction de la température

[Fig.8] La figure 8 représente la tension de référence Vref en abscisse et le rendement en pourcentage en ordonnée pour un mode de réalisation d'un système de pompe de charge selon l'invention et une pompe de charge réalisant une division par 2.

[Fig.9] La figure 9 représente l'évolution de la tension de sortie Vout et de la tension de référence Vref en fonction du temps pour un système de pompe de charge.

[Fig.10] la figure 10 présente un schéma-blocs d'un système de pompe de charge selon l'invention dans le cas d'une pompe de charge élévatrice.

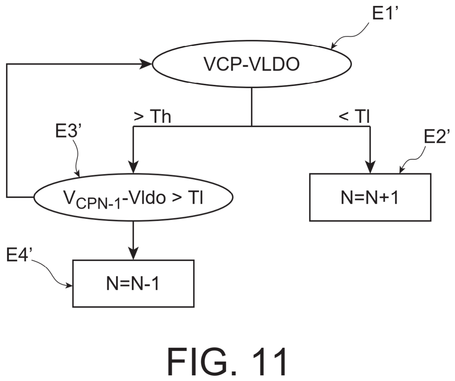

[Fig.11] la figure 11 est un organigramme qui présente les étapes d'un procédé de configuration d'un nombre d'étages de pompe activé pour un système de pompe de charge élévatrice.

D'autres avantages et caractéristiques techniques pourront ressortir de la description qui suit et qui est faite en référence aux figures présentées ci-dessus.

## Description détaillée

## Système de pompe de charge

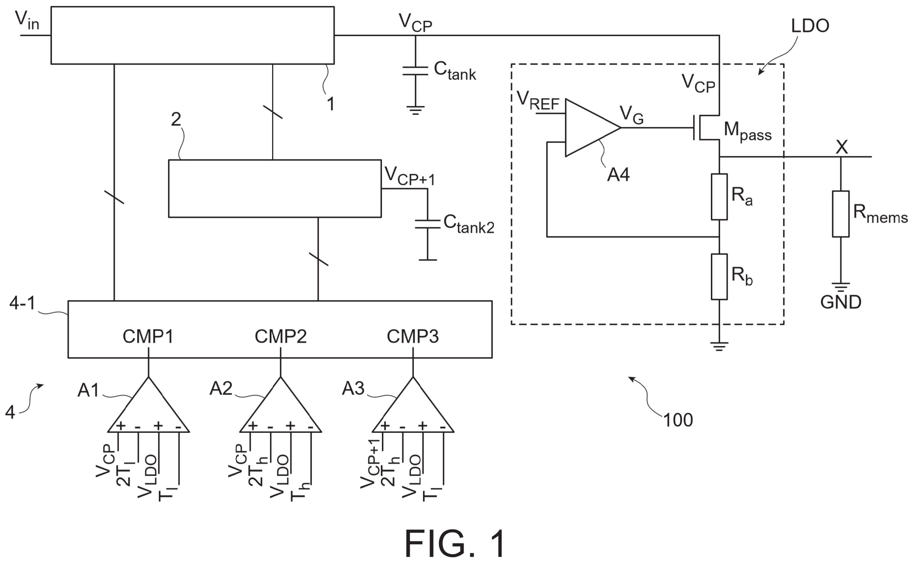

La figure 1 présente un schéma-blocs du système de pompe de charge 100.

La figure 1 représente notamment les principaux éléments du système de pompe de charge 100: une pompe de charge 1, un circuit de prédiction 2, ainsi qu'un dispositif d'activation 4. Un régulateur de tension linéaire LDO est disposé en sortie de la pompe de charge.

La pompe de charge 1 fournit une tension de sortie Vcp qui est la tension en entrée du régulateur de tension linéaire LDO.

Si la différence entre la tension Vcp en entrée du régulateur de tension linéaire LDO et sa tension de sortir Vldo est comprise dans une gamme de tension de fonctionnement entre un seuil haut de tension Th et un seuil bas de tension TI, le régulateur de tension linéaire LDO peut fonctionner dans une zone de fonctionnement en régulation, autrement dit le régulateur de tension linéaire LDO peut avoir le fonctionnement souhaité. Le seuil haut de tension et le seuil bas de tension peuvent être définis en fonction de caractéristiques intrinsèques au régulateur de tension linéaire LDO. Le seuil bas peut par exemple être de 150mV et le seuil haut de 200mV.

Le système de pompe de charge 1 permet d'adapter la tension de sortie Vcp pour rester dans la zone de fonctionnement souhaitée du LDO, ou d'une autre charge en sortie de la pompe de charge.

La pompe de charge 1 est une pompe de charge à plusieurs étages reconfigurables ou à rang programmable, c'est-à-dire que la pompe de charge 1 peut présenter différentes configurations de fonctionnement dans lesquelles le nombre d'étage de pompe activé N peut varier. On peut voir d'après la figure 1 que la pompe de charge 1 prend la tension d'alimentation Vin et réduit la tension d'alimentation Vin à travers les différents étages de pompe pour produire la tension de sortie de pompe Vcp dont la valeur correspond à la tension aux bornes d'une capacité Ctank reliée entre la sortie de la pompe de charge 1 et une borne de référence GND.

La tension de sortie de la pompe Vcp dépend du nombre d'étage activés N.

Ainsi, le dispositif d'activation 4 est configuré pour ajuster les séquences de commutation des interrupteurs de la pompe de charge 1 et modifier la configuration de la pompe de charge 1, notamment le nombre d'étages de pompe activés pour maintenir la tension de sortie de pompe Vcp désirée.

En particulier, le dispositif d'activation 4 est configuré pour modifier ou non, en fonction d'un résultat de prédiction le nombre N d'étages de pompe Si activés de sorte à modifier ou non la tension de sortie de pompe Vcp pour que la différence entre la tension de sortie de pompe Vcp et la tension de sortie de régulateur Vldo soit comprise dans la gamme de tensions de fonctionnement prédéterminée.

Le dispositif d'activation peut utiliser des comparaisons entre la tension de sortie de la pompe Vcp, une tension de prédiction Vcp+1, la tension Vldo, et les seuils de référence haut et bas Th et **Tl.**

Le circuit de prédiction 2 vise à générer la tension de prédiction Vcp+1, pour anticiper l'effet d'une modification du nombre d'étages activés, en particulier d'une augmentation du nombre d'étages activés par rapport au nombre d'étages activés courants.

Le procédé mis en œuvre par le dispositif d'activation 4 ainsi que des modes de réalisation du circuit de prédiction sont détaillés ultérieurement.

Le régulateur de tension linéaire LDO utilise la tension Vcp pour produire la tension de sortie de régulateur Vldo. Le régulateur de tension linéaire LDO garantit que la tension de sortie de régulateur Vldo reste stable malgré les variations de la tension d'alimentation Vin.

Un objectif du régulateur de tension linéaire LDO est de fournir une tension de sortie stable Vldo à partir d'une tension de sortie de pompe Vcp (qui est également la tension en entrée du régulateur de tension linéaire LDO). Il est souhaitable que la différence entre les 2 tensions Vcp et Vldo soit aussi faible que possible tout en maintenant le LDO dans sa zone de fonctionnement optimal.

Comme on peut le voir sur la figure 1, le régulateur de tension linéaire LDO comprend un transistor Mpass, contrôlé par un amplificateur opérationnel A4. Le régulateur de tension linéaire LDO peut ajuster la tension de sortie de régulateur Vldo en modulant une tension de grille Vg du transistor Mpass pour maintenir la tension de sortie de régulateur Vldo à la valeur désirée.

L'amplificateur opérationnel A4 peut comparer une tension de référence Vref avec une fraction de la tension de sortie de régulateur Vldo obtenue par le pont résistif Ra, Rb. La tension de référence Vref peut être générée par une source de tension externe au système de pompe de charge 100, et peut varier, notamment à cause des variations de température.

L'amplificateur opérationnel A4 peut ensuite ajuster la tension de grille Vg pour stabiliser la tension de sortie du régulateur Vldo. Si la tension de sortie de régulateur Vldo diminue, l'amplificateur opérationnel A4 augmente la tension de grille Vg pour permettre un passage de plus de courant à travers le transistor Mpass, augmentant ainsi la tension de sortie de régulateur Vldo. Si la tension de sortie de régulateur Vldo augmente, l'amplificateur opérationnel A4 diminue la tension de grille Vg pour réduire le courant, abaissant tension de sortie de régulateur Vldo. Le circuit de rétroaction comprenant le pont résistif Ra, Rb et l'amplificateur opérationnel A4 vise à maintenir une tension de sortie de régulateur Vldo constante malgré des variations de la tension de sortie de pompe Vcp.

Dans la figure 1, la tension de sortie de régulateur Vldo est fournie à un microsystème électromécanique Rmems compris dans le système de pompe de charge 100 et connecté en sortie du régulateur de tension LDO entre la borne de référence GND et une borne de sortie du régulateur X.

Le microsystème électromécanique Rmems peut être remplacé par tout type de charge électrique, et notamment une charge résistive.

De manière avantageuse, pour une variation de la tension de référence Vref de 100mV à 500mV, l'utilisation d'un circuit de prédiction 2 pour le système de pompe de charge 100 peut permettre le fonctionnement du régulateur de tension linéaire LDO dans la zone de régulation, et peut augmenter le rendement en puissance du système de pompe de charge 100 de l'ordre de 9%.

Le système de pompe de charge 100 peut être intégralement réalisé dans une technologie CMOS.

**Dispositif d'activation et procédé de configuration du nombre d'étages de pompe de charge**

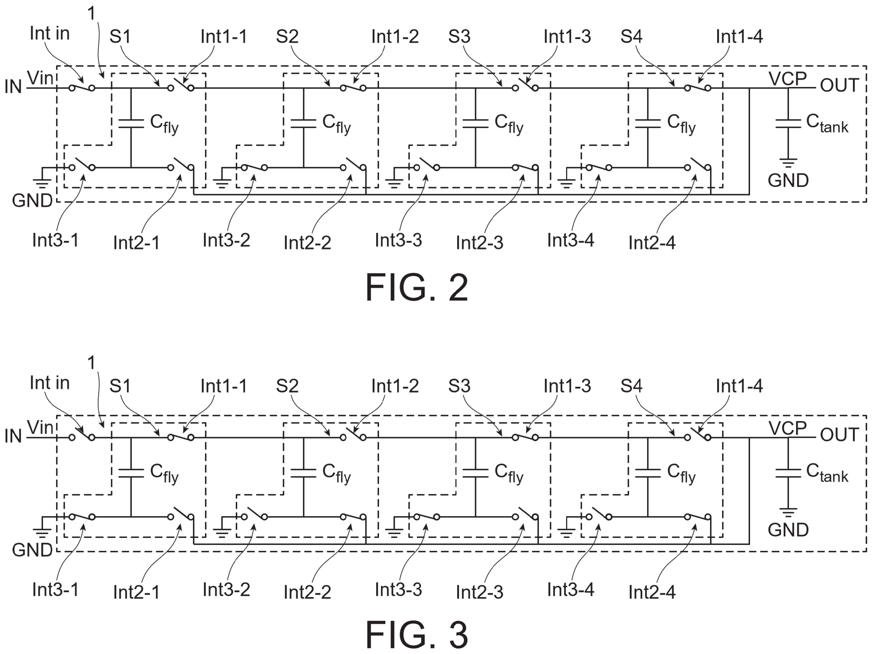

Le procédé de commande de configuration d'un nombre N d'étages de pompe mis en œuvre par le dispositif d'activation 4 est à présent décrit en référence aux figures 1 et 2.

Le dispositif comprend une machine à état 4-1 qui stocke dans une mémoire un nombre N d'étages activé et est configurée pour modifier ce nombre, ainsi qu'un ensemble de comparateurs A1, A2, A3. La machine a état est mise en oeuvre par exemple par un circuit numérique dédié. En particulier, le circuit numérique peut être implémenté avec des portes logiques intégrées à côté de la pompe de charge sur le même circuit intégré.

Le procédé de configuration du nombre d'étages de pompe activé comprend les étapes suivantes.

Une étape de mesure E1 d'une différence de tension entre la tension de sortie de pompe Vcp et la tension de sortie de régulateur Vldo est réalisée. Si ladite différence est inférieure au seuil bas TI, par exemple à 150mV, le nombre d'étages de pompe activés N est modifié dans une étape E2 en réduisant ledit nombre d'étages de pompe activé, par exemple d'un étage de pompe activé, c'est à dire N=N-1.

La comparaison de la différence entre Vcp et Vldo avec le seuil bas peut être réalisée par un premier comparateur A1 qui reçoit en entrée Vcp, Vldo ainsi que le seuil bas TI. A titre d'exemple, un amplificateur de différence différentiel ou DDA (differential difference amplifier) peut être utilisé comme comparateur. Dans ce cas, l'équation donnant la tension de sortie VCMP1, si les quatre entrées sont respectivement aux tensions Vcp, 2TI, Vldo et TI, est la suivante :

$$VCMP1= A1[(Vcp-2*TI)-(Vldo-TI)]$$

On en déduit :

$$VCMP1=A1[(Vcp-Vldo-TI)]$$

Soit une mesure de Vcp-Vldo par rapport à **TI,** avec A1 le gain du comparateur.

Si ladite différence entre Vcp et Vldo est supérieure au seuil haut **Th,** par exemple à 200mV, on calcule dans une étape E3 un résultat de prédiction ) qui correspond à une différence entre la tension de prédiction Vcp+1 et la tension Vldo.

Si la différence entre Vcp+1 et Vldo est supérieure au seuil bas TI, par exemple à 150mV, le dispositif d'activation 4 modifie dans une étape E4 le nombre d'étages de pompe activés N en augmentant ledit nombre d'étages de pompe activé, par exemple d'un étage de pompe activé, c'est à dire N=N+1.

La comparaison de la différence entre Vcp et Vldo avec le seuil haut Th peut être réalisée par un deuxième comparateur A2 qui reçoit en entrée Vcp, Vldo ainsi que le seuil haut Th. A titre d'exemple, un amplificateur de différence différentiel ou DDA (differential difference amplifier) peut être utilisé comme comparateur. Dans ce cas, l'équation donnant la tension de sortie VCMP2, si les quatre entrées sont respectivement aux tensions Vcp, 2Th, Vldo et **Th** :

$$VCMP2= A2[(Vcp-2*Th)-(Vldo-Th)]$$

On en déduit :

$$VCMP2=A2[(Vcp-Vldo-Th)]$$

Soit une mesure de Vcp-Vldo par rapport à Th, avec A2 le gain du comparateur.

La comparaison de la différence entre Vcp+1 et Vldo avec le seuil bas TI peut être réalisée par un troisième comparateur A3 qui reçoit en entrée Vcp+1, Vldo ainsi que le seuil bas TI. A titre d'exemple, un amplificateur de différence différentiel ou DDA (differential difference amplifier) peut être utilisé comme comparateur. Dans ce cas, l'équation donnant la tension de sortie VCMP3, si les quatre entrées sont respectivement aux tensions Vcp+1, 2TI, Vldo et TI :

$$VCMP3= A3[(Vcp+1 - 2*TI)-(Vldo-TI)]$$

On en déduit :

$$VCMP3=A3[(Vcp+1 - Vldo-TI)]$$

Soit une mesure de Vcp+1-Vldo par rapport à TI, avec A3 le gain du comparateur.

Dans le cas où ladite différence entre Vcp et Vldo est comprise entre le seuil bas TI et le seuil haut Th, on maintient inchangé le nombre d'étages N de pompe activé. La pompe de charge 1 garde dans ce cas la configuration de pompe courante.

Les tensions de sortie des comparateurs VCMP1, VCMP2, VCMP3 peuvent être considérées comme un signal binaire, respectivement CMP1, CMP2, CMP3, prenant une valeur 1 si la valeur de tension est positive, 0 si la valeur est négative ce qui permet de mettre en oeuvre le procédé exposé ci-dessus de façon simple.

Ainsi, si les signaux de comparaison CMP1, CMP2 et CMP3 ont tous la valeur 1, alors on augmente le nombre d'étage de pompe activé d'un étage activé. Si les signaux de comparaison CMP1, CMP2 et CMP3 ont tous la valeur 0, alors on diminue le nombre d'étage de pompe activé d'un étage activé. Dans tous les autres cas, on maintient inchangé le nombre N d'étage de pompe activés.

**Pompe de charge**

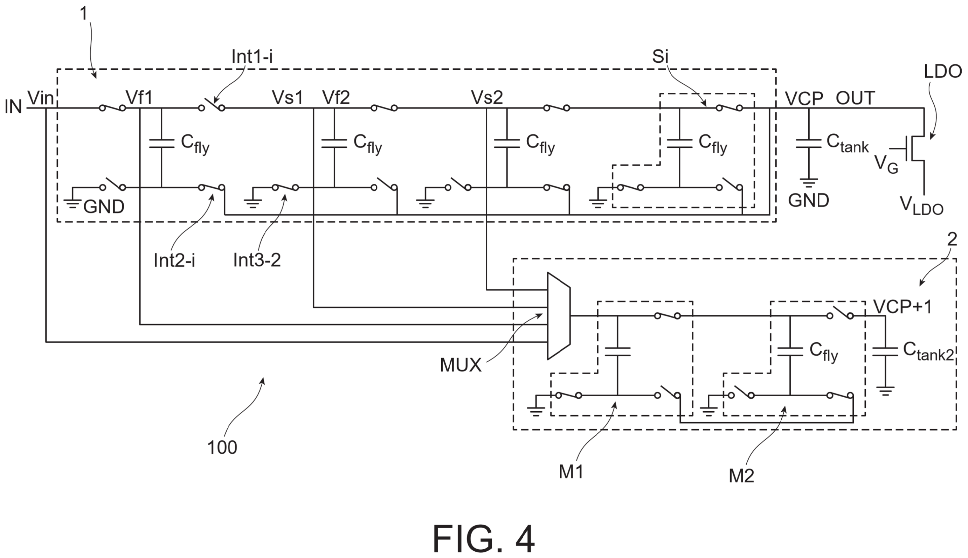

Un exemple de pompe de charge 1 va être à présent décrit en référence aux figures 3 et 4. La pompe de charge 1 est connectée entre une borne d'entrée IN et une borne de référence GND à une alimentation d'entrée externe au système de pompe de charge 100 pour recevoir une tension d'alimentation d'entrée Vin. La tension d'alimentation Vin peut varier dans le temps de manière périodique ou non périodique. A titre d'exemple, une telle variation peut être fonction de paramètres non prédictibles par un composant fournissant la tension d'entrée, comme un ASIC, ou provenir d'un fonctionnement sous batterie.

La pompe de charge 1 peut générer, en fonction de la tension d'alimentation d'entrée Vin, en sortie de la pompe de charge 1 entre une borne de sortie OUT et la borne de référence GND, une tension de sortie de pompe Vcp.

La pompe de charge 1 peut être abaisseuse, c'est-à-dire que la tension de sortie de pompe Vcp est inférieure à la tension d'alimentation d'entrée Vin ce qui est la configuration présentée sur les figures 1à 5.

La pompe de charge 1 peut comprendre un interrupteur d'entrée Int-in et un ensemble comprenant n d'étages de pompe Si. Dans l'exemple des figures 2 et 3, le nombre n d'étages est égal à quatre, et on peut diviser la tension d'alimentation Vin d'un facteur allant jusqu'à cinq. Autrement dit, la tension de sortie de pompe Vcp peut être jusqu'à cinq fois inférieure à la tension d'alimentation Vin.

Chaque étage de pompe a un rang i, le rang i évoluant de manière croissante en partant de la source d'alimentation en entrée de la pompe de charge 1 et en allant en direction de la sortie de pompe.

Les étages de pompe S1, S2, S3, S4 sont présentés sur les figures 2 et 3.

Chaque étage de pompe Si comprend une capacité ou condensateur de transfert Cfly. Une première électrode, qui est l'électrode haute sur les figures 1 et 2, du condensateur Cfly est reliée d'une part à l'entrée de l'étage Si, et d'autre part par un premier interrupteur Int1-i à l'entrée de l'étage suivant Si+1 (ou la tension de sortie pour le dernier étage).

Une deuxième électrode, qui est l'électrode basse sur les figures 2 et 3, est reliée d'une part par un deuxième interrupteur Int2-i à la tension de sortie VOUT et d'autre part par un troisième interrupteur Int3-i à une borne de référence GND.

Les commutateurs et les condensateurs de transfert peuvent être réalisés dans une technologie CMOS. Chaque commutateur peut commuter entre un état amorcé ou ON (dans lequel le commutateur est fermé) et un état bloqué ou OFF (dans lequel le commutateur est ouvert). Si le commutateur int1-i de l'étage de pompe Si est dans un état amorcé, l'étage de pompe $S_i$ correspondant est alors activé. Si le commutateur int1-i de l'étage de pompe $S_i$ est dans un état bloqué, l'étage de pompe Si correspondant est alors désactivé.

La pompe de charge 1 est reconfigurable ou à rang programmable, c'est-à-dire que ladite pompe de charge 1 peut présenter différentes configurations de fonctionnement dans lesquelles le nombre d'étage de pompe activé N peut varier. Dans l'exemple de la figure 3, la pompe de charge 1 présente quatre étages de pompe S1, S2, S3, S4 et le nombre d'étages de pompe activés N peut varier entre 0 et quatre selon l'amorçage et le blocage des interrupteurs int1-i. Par exemple, parmi les étages de pompe S1 à S4 seuls les étages de pompe S1 et S2 peuvent être activés.

Chaque étage de pompe $S_i$ est configuré pour être activé ou désactivé en fonction d'un signal d'activation transmis audit étage de pompe $S_i$ par le dispositif d'activation qui détermine le nombre d'étage activé N. Le nombre d'étage N de pompe $S_i$ activé est compris entre 0 et Nmax, le nombre Nmax d'étages de pompe peut être compris entre 3 et 10, par exemple quatre étages de pompe $S_i$.

Chaque étage de pompe $S_i$ est configuré pour recevoir en entrée une tension intermédiaire d'entrée Vfi et pour générer en sortie dudit étage de pompe, sur la base de la tension intermédiaire d'entrée Vfi, une tension intermédiaire de sortie Vsi, la tension intermédiaire d'entrée Vfi+1 d'un étage de pompe de rang i+1 correspondant à la tension intermédiaire de sortie Vsi d'un étage de pompe de rang i, le rang i étant compris entre 1 et Nmax.

La pompe de charge présente deux phases de fonctionnement qui alternent de façon périodique, ces deux phases étant présentées respectivement sur les figures 2 et 3.

Nous présentons ces deux phases de configuration dans un premier temps en supposant que tous les étages de pompe Si sont activés

Dans une première phase représentée sur la figure 2, l'interrupteur d'entrée Intin est fermé.

Le premier étage S1 présente le premier interrupteur Int1-1 ouvert, le deuxième interrupteur Int2-1 fermé et le troisième interrupteur Int3-1 ouvert.

Le deuxième étage S2 présente le premier interrupteur Int1-2 fermé, le deuxième interrupteur Int2-2 ouvert et le troisième interrupteur Int3-2 fermé.

Les autres étages de rang impair (sur la figure 2, S3) présentent la même configuration des interrupteurs que S1, les autres étages de rang pair (sur la figure 3, S4) présentent la même configuration des interrupteurs que S2.

Dans une deuxième phase représentée sur la figure 3, l'interrupteur d'entrée Intin est ouvert.

Le premier étage S1 présente le premier interrupteur Int1-1 fermé, le deuxième interrupteur Int2-1 ouvert et le troisième interrupteur Int3-1 fermé.

Le deuxième étage S2 présente le premier interrupteur Int1-2 ouvert, le deuxième interrupteur Int2-2 fermé et le troisième interrupteur Int3-2 ouvert.

Les autres étages de rang impair (sur la figure 3, S3) présentent la même configuration des interrupteurs que S1, les autres étages de rang pair (sur la figure 3, S4) présentent la même configuration des interrupteurs que S2.

En alternant les premières et deuxième phases, la charge et la décharge des condensateurs, il est possible d'obtenir un effet de division de tension.

En supposant que les commutations sont suffisamment rapides entre les deux phases et que les tensions dans les différents condensateurs n'évoluent que de façon marginale,

On obtient de façon approchée :

Dans la première phase :

$$(1) \quad V_{cp} = V_{in} - V_{Cfly1}$$

$$(2) \quad V_{cp} = V_{Cfly4}$$

Dans la deuxième phase :

$$(3) \quad V_{cp} = -V_{Cfly4} + V_{Cfly3}$$

$$(4) \quad V_{cp} = -V_{Cly3} + V_{Cfly2}$$

$$(5) \quad V_{cp} = -V_{Cfly2} + V_{Cfly1}$$

On en déduit en additionnant (1) à (5) que $V_{cp} = V_{in}/5$

Si l'un des premiers interrupteur d'un étage de pompe Si reste fermé en fonction du signal d'activation fourni par le dispositif d'activation pendant les deux phases de fonctionnement, l'étage correspondant est désactivé et la division est modifiée.

Ainsi :

- si l'interrupteur Int1-4 reste fermé pendant les deux phases de fonctionnement, une division par 4 est réalisée.
- si les interrupteurs Int1-4 et Int1-3 restent fermés pendant les deux phases de fonctionnement, une division par 3 est réalisée.
- si les interrupteurs Int1-4, Int1-3 et Int1-2 restent fermés pendant les deux phases de fonctionnement, une division par 2 est réalisée.
- si les interrupteurs Int1-4, Int1-3, Int1-2 et Int-1 restent fermés pendant les deux phases de fonctionnement, aucune division n'est réalisée.

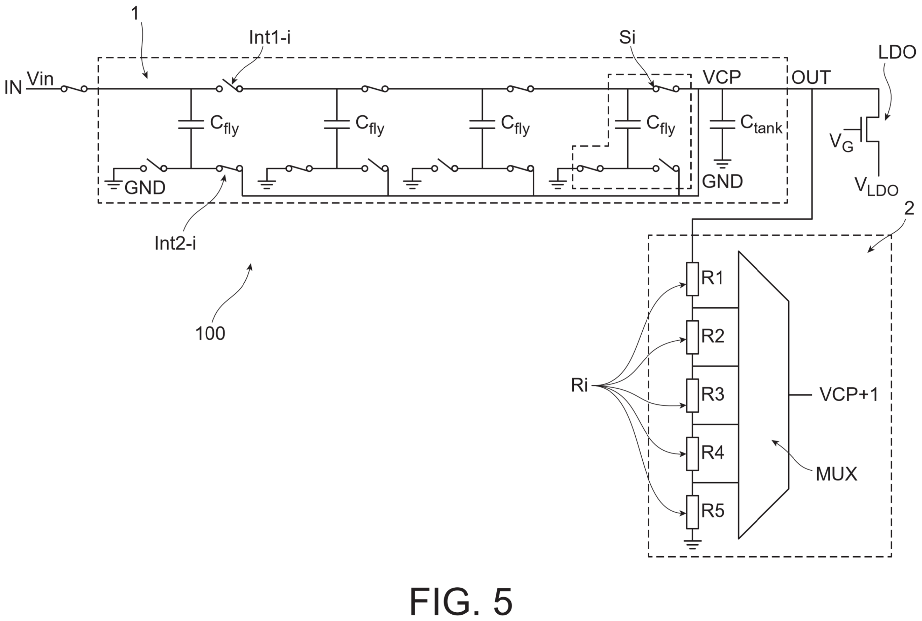

La pompe de charge 1 décrite est destinée à être utilisée dans un système de pompe de charge 100 en combinaison avec un circuit de prédiction 2 dont deux modes de réalisation sont présentés dans les figures 4 et 5.

**Circuit de prédiction**

**Premier mode de réalisation**

La figure 4 présente un premier mode de réalisation d'un circuit de prédiction.

La figure 4 représente une partie du système de pompe de charge 100 comprenant la pompe de charge 1 telle que décrite précédemment et un circuit de prédiction 2 connecté à la pompe de charge 1. Le fonctionnement de la pompe de charge 1 de la figure 5 est identique à celui des figures 3 et 4. Un régulateur de tension linéaire ou régulateur de tension LDO est également connecté en sortie de la pompe de charge 1. Le régulateur de tension LDO est connecté à la pompe de charge 1 entre la borne de sortie OUT et la borne de référence GND, et configuré pour recevoir la tension de sortie de pompe Vcp en entrée dudit régulateur de tension LDO et pour générer, sur la base de la tension de sortie de pompe Vcp, une tension de sortie de régulateur Vldo.

Le circuit de prédiction 2 est configuré pour générer une tension de prédiction Vcp+1 en sortie du circuit de prédiction 2 représentative d'une modification du nombre d'étages de pompe $S_i$ activés.

Le circuit de prédiction 2 peut prélever une pluralité de tensions intermédiaires de d'entrée Vfi, notamment à différents nœuds de la pompe de charge 1, et est configuré pour générer une tension de prédiction Vcp+1 sur la base de la tension intermédiaire sélectionnée Vfi

Le circuit de prédiction 2 de la figure 4 comprend un multiplexeur MUX configuré pour sélectionner une tension intermédiaire d'entrée Vfi parmi les tensions intermédiaires d'entrée Vfi prélevées. Le multiplexeur est ainsi relié aux entrées de chacun des étages de pompe. La sélection réalisée par le multiplexeur est commandée par le dispositif d'activation 4 et correspond au nombre d'étage activé N.

Le circuit de prédiction 2 est configuré pour fonctionner par division capacitive et comprend en sortie du multiplexeur au moins un étage de modification Mi de structure similaire à un étage de pompe $S_i$ de la pompe de charge 1. Dans le cas de la figure 4, le circuit de prédiction 2 comprend deux étages de modifications M1, M2 .

Ainsi, en supposant que N étages sont activés, le circuit de prédiction est configuré pour prélever une tension VfN en entrée de l'étage N, le multiplexeur étant configuré pour sélectionner cette tension parmi ses différentes entrées, et pour l'appliquer en entrée du premier étage de modification qui simule l'étage N, le premier étage de modification est relié au deuxième étage de modification qui simule l'étage N+1, la sortie de cette étage correspondant à la tension Vcp+1 qui est établie au borne d'une capacité Ctank2, reliée par une électrode à une borne de référence GND.

La tension Vcp+1 permet de prédire la tension qui serait appliqué si un étage supplémentaire était activé.

Sur la figure 4, la pompe de charge 1 est dans un phase de fonctionnement correspondant à la figure 2, les étages 1 et 2 étant activés. Ainsi, les étages de modifications M1 et M2 simulent les étages S2 et S3 pour produire une tension de prédiction Vcp+1 qui correspondrait à l'activation de l'étage 3. Le multiplexeur est configuré pour prélever la tension Vf2 en entrée de l'étage S2.

Les commandes d'activation du ou des étages de modifications reçue du dispositif d'activation sont les mêmes que celles du ou des étages de la pompe de charge qu'ils simulent.

De manière avantageuse, le premier mode de réalisation du système de pompe de charge 100 permet de prélever une tension intermédiaire Vfi au niveau de n'importe quel étage de pompe Si.

Ainsi, le circuit de prédiction 2 permet de générer une tension de prédiction Vcp+1 qui permet de déterminer avec précision le nombre d'étages de pompe $S_i$ qui doit être activé afin de maintenir le régulateur de tension linéaire LDO dans la zone de fonctionnement en régulation.

**Deuxième mode de réalisation**

La figure 5 présente un deuxième mode de réalisation du circuit de prédiction 2.

Le fonctionnement de la pompe de charge 1 représenté sur la figure 5 est identique à celui des figures 2 et 3. La tension de sortie de pompe Vcp est injectée en entrée du régulateur de tension linéaire LDO qui génère une tension de sortie de régulateur Vldo.

Le circuit de prédiction 2 représenté sur la figure 5 est différent du circuit de prédiction 2 de la figures 4.

Le circuit de prédiction 2 de la figure 5 est configuré pour fonctionner par interpolation résistive, c'est-à-dire que le circuit de prédiction 2 comprend un pont diviseur de tension résistif R1, R2, R3, R4, R5 connecté entre une première borne choisie entre la borne de sortie OUT et la borne d'entrée IN et une deuxième borne correspondant à la borne de référence GND.

Le pont diviseur de tension résistif R1, R2, R3, R4, R5 comprend une pluralité de composants résistifs Ri, chaque composant résistif Ri étant configuré de sorte que la tension aux bornes de chaque composant résistif Ri corresponde à la tension intermédiaire d'entrée Vfi de l'étage de pompe $S_i$ correspondant. Par exemple, La tension aux bornes de la résistance R1 peut correspondre à la tension intermédiaire d'entrée du quatrième étage de pompe S1.

Un exemple pour calculer la valeur d'une des résistances (R1) du pont diviseur de tension résistif est donné ci-après.

L'équation de la tension de sortie de pompe Vcp est la suivante :

[Math. 1]

$$V_{cp} = \frac{V_{in}}{N} - I_{load} * \frac{1}{2 * N * C_f * f_{CP}}$$

Vin est la tension d'alimentation en entrée, N le nombre d'étages de pompe activés, Iload le courant de charge, Cf la capacité de chaque condensateur de transfert Cfly et fcp la fréquence de commutation de la pompe de charge 1.

L'équation exprime la tension de sortie de pompe Vcp en tenant compte de la chute de tension due au courant de charge et aux caractéristiques de la pompe de charge 1.

L'impédance de la pompe de charge $Z_{0cp}$ peut être calculée selon l'équation suivante :

[Math. 2]

$$Z_{0cp} = \frac{1}{2 * N * C_f * f_{CP}}$$

L'impédance $Z_{0cp}$ est déterminée par les caractéristiques de la pompe de charge 1, notamment le nombre N d'étages de pompe, la capacité des condensateurs de transfert Cfly, et la fréquence de commutation fcp.

La tension de prédiction Vcp+1 peut être calculée selon l'équation suivante :

[Math. 3]

$$V_{cp+1} = \frac{V_{in}}{N+1} - I_{load} * \frac{1}{2 * N + 1 * C_f * f_{CP}}$$

La tension de prédiction Vcp+1 correspond à une division de la tension Vcp par le pont diviseur résistif R1, R', avec R' correspondant à la somme des résistances du bas du pont diviseur (R'=R2+R3+R4+R5) et se calcule donc selon l'équation suivante :

[Math. 4]

$$V_{cp+1} = V_{CP} * \frac{R'}{R1 + R'}$$

En substituant les équations précédentes pour trouver R1 en fonction de R', l'équation suivante peut être obtenue :

[Math. 5]

$$\frac{V_{in}}{N+1} - I_{load} * \frac{1}{2 * (N+1) * C_f * f_{CP}} = (\frac{V_{in}}{N} - I_{load} * \frac{1}{2 * N * C_f * f_{CP}}) * \frac{R'}{R1 + R'}$$

En développant et en simplifiant, l'équation suivante peut être obtenue :

[Math.6]

$$\left(\frac{V_{in}}{N+1} - I_{load} * \frac{1}{2 * (N+1) * C_f * f_{CP}}\right) * (R1 + R') = (\frac{V_{in}}{N} - I_{load} * \frac{1}{2 * N * C_f * f_{CP}}) * R'$$

En isolant la résistance R1, on obtient:

[Math. 7]

$$R1\frac{V_{in}}{N+1} - \frac{I_{load}.R1}{2 * (N+1) * C_f * f_{CP}} = R'(\frac{V_{in}}{N} - \frac{I_{load}}{2 * N * C_f * f_{CP}} - \frac{V_{in}}{N+1} + \frac{I_{load}}{2 * (N+1) * C_f * f_{CP}})$$

En simplifiant l'équation précédente, on obtient :

[Math. 8]

$$R1 = R'(\frac{V_{in}}{N} - \frac{I_{load}}{2 * N * C_f * f_{CP}} - \frac{V_{in}}{N+1} + \frac{I_{load}}{2 * (N+1) * C_f * f_{CP}})/(\frac{V_{in}}{N+1} - I_{load} * \frac{1}{2 * (N+1) * C_f * f_{CP}})$$

En négligeant les pertes ohmiques, on obtient :

[Math. 9]

$$R1 = R'/N$$

Le circuit de prédiction 2 comprend également un multiplexeur MUX connecté aux bornes d'au moins un composant résistif de la pluralité de composants résistifs Ri et configuré pour sélectionner une tension parmi les tensions aux bornes des composants résistifs. La tension sélectionnée correspond à la tension de prédiction Vcp+1. La sélection réalisée par le multiplexeur est commandée par le dispositif d'activation 4 et correspond au nombre d'étage activé N.

À la sortie de pompe, le pont diviseur de tension, qui constitue une échelle résistive, est connecté pour diviser la tension de sortie de pompe Vcp en plusieurs niveaux de tensions inférieurs à la tension de sortie de pompe Vcp. Le multiplexeur MUX est ensuite utilisé pour sélectionner la tension la plus proche de chaque rang de division sur cette échelle résistive. Cela permet de fournir différentes tensions précises en sortie du circuit de prédiction 2 en fonction de la tension sélectionnée.

De manière avantageuse, le système de pompe de charge 100 à interpolation résistive réduit l'encombrement par rapport au système de pompe de charge 100 à division capacitive. A titre d'exemple, pour une pompe avec 4 étages, donc un rapport de division de 5, l'encombrement est réduit de 20%.

Dans les figures 1 à 4, la pompe de charge 1 est une pompe de charge de Dickson. Néanmoins, la pompe de charge 1 peut être d'un autre type, par exemple une pompe de charge à diode ou une pompe de charge à commutation de condensateurs.

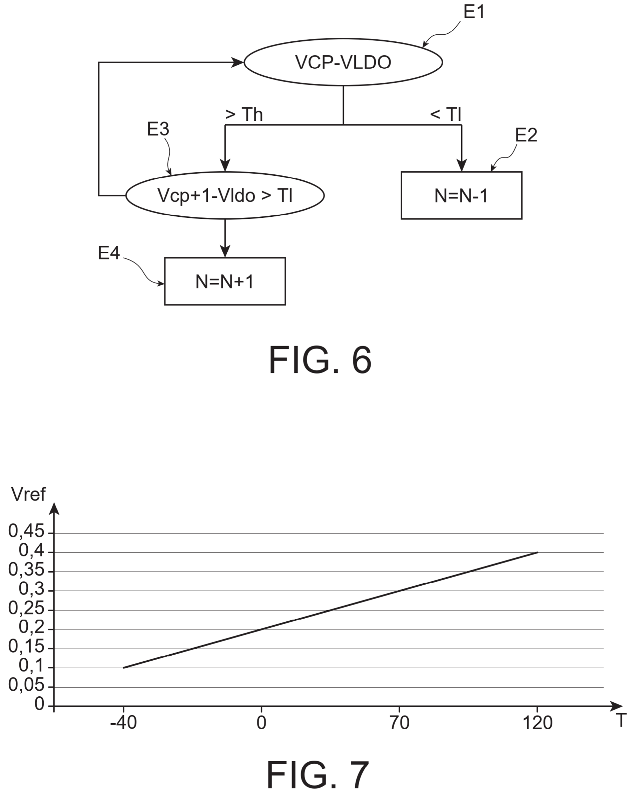

La figure 7 représente l'évolution de la tension de contrôle Vref du LDO en fonction de la température.

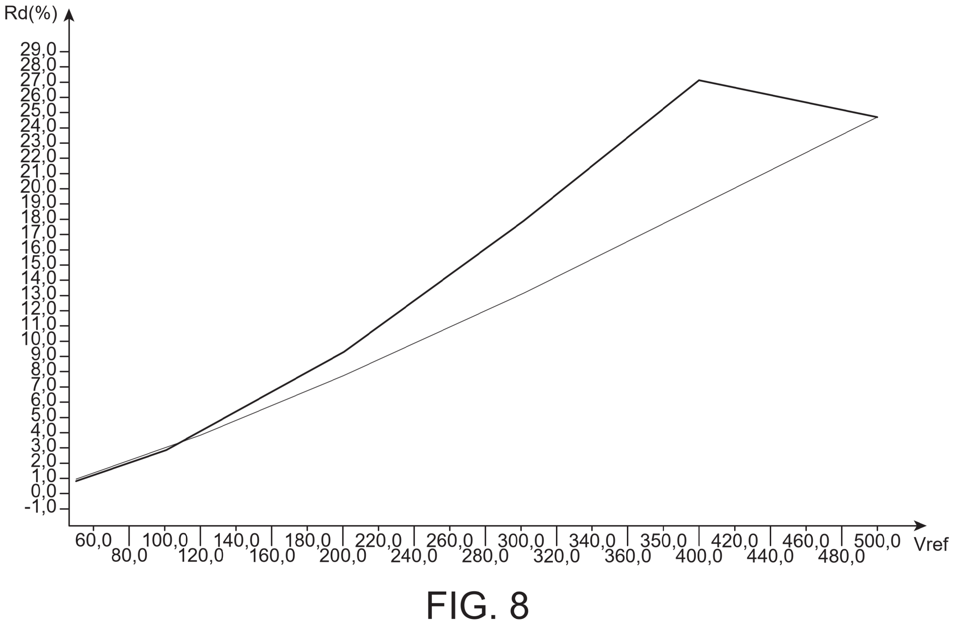

La figure 8 représente l'efficacité de la solution comparée à une pompe de charge avec une division par 2, avec la tension de référence Vref en abscisse et le rendement en pourcentage en ordonnée.

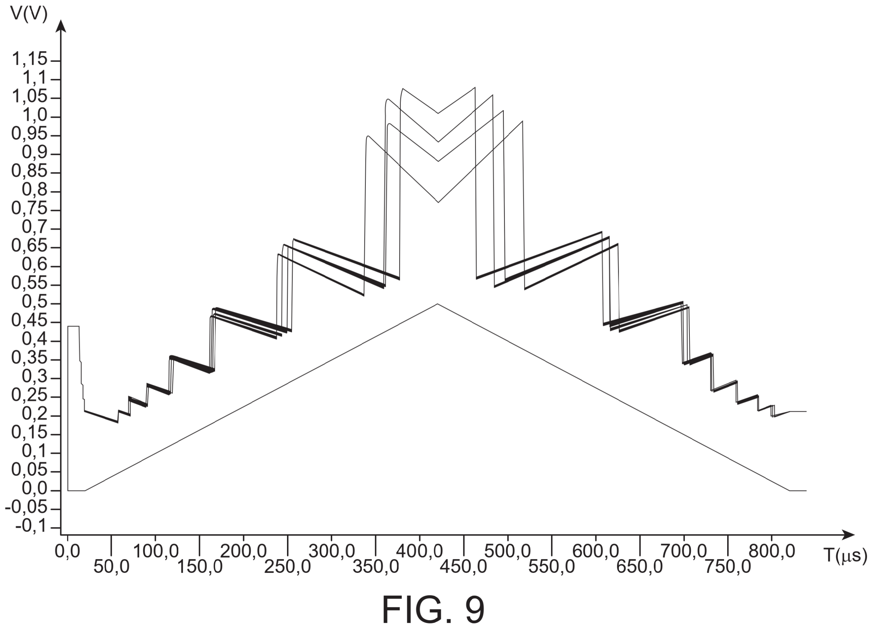

La figure 9 représente l'évolution de la tension de sortie Vout d'un système de pompe de charge et de la tension de référence Vref en fonction du temps. Sur la figure, il apparaît que Vout est toujours au moins 150mv au-dessus de Vref. Les crans correspondent à un changement du rang de division, c'est-à-dire à un changement du nombre d'étage activés.

De manière alternative selon un mode de réalisation non représenté, la pompe de charge 1 peut être multiplicatrice, c'est-à-dire que la tension de sortie de pompe Vcp est supérieure à la tension d'alimentation d'entrée Vin.

### Application à une pompe de charge élévatrice de tension

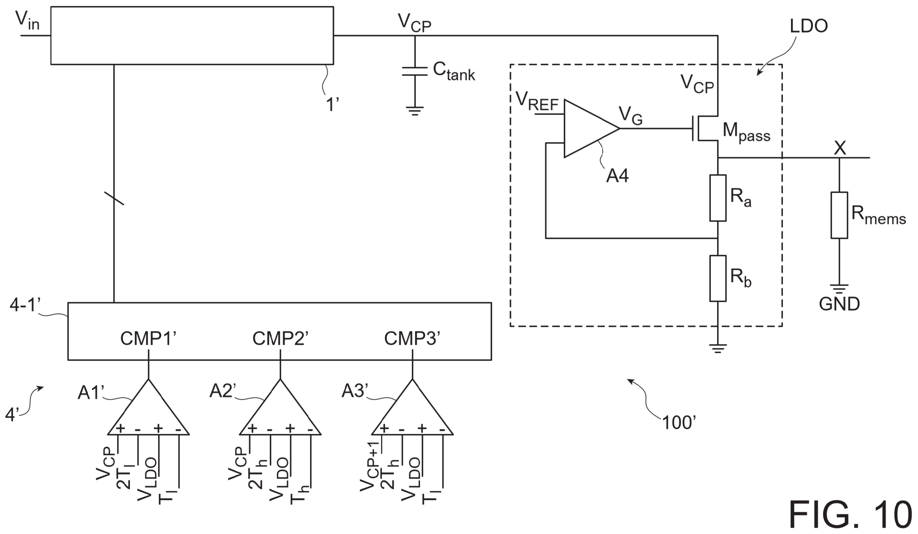

La figure 10 présente un schéma-blocs du système de pompe de charge 100' dans le cas d'une pompe de charge élévatrice.

La figure 10 représente notamment les principaux éléments du système de pompe de charge 100': une pompe de charge élévatrice 1', ainsi qu'un dispositif d'activation 4'. Un régulateur de tension linéaire LDO est disposé en sortie de la pompe de charge.

La pompe de charge 1' est reconfigurable ou à rang programmable, c'est-à-dire que ladite pompe de charge 1' peut présenter différentes configurations de fonctionnement dans lesquelles le nombre d'étage de pompe activé N peut varier, la tension de sortie de la pompe étant d'autant plus élevée que le nombre d'étages activés est élevé.

Chaque étage de pompe est configuré pour être activé ou désactivé en fonction d'un signal d'activation transmis audit étage de pompe par le dispositif d'activation qui détermine le nombre d'étage activé N. Le nombre d'étage N de pompe activé est compris entre 0 et Nmax, le nombre Nmax d'étages de pompe peut être compris entre 3 et 10, par exemple quatre étages de pompe.

Le dispositif d'activation 4' comprend une machine à état 4-1' qui stocke dans une mémoire un nombre N d'étages activé et est configurée pour modifier ce nombre, ainsi qu'un ensemble de comparateurs A1', A2', A3'. La machine à état est mise en oeuvre par exemple par un circuit numérique dédié. En particulier, le circuit numérique peut être implémenté avec des portes logiques intégrées à côté de la pompe de charge sur le même circuit intégré.

Le procédé de configuration du nombre d'étages de pompe activé comprend les étapes suivantes.

Une étape de mesure E1' d'une différence de tension entre la tension de sortie de pompe Vcp et la tension de sortie de régulateur Vldo est réalisée. Si ladite différence est inférieure au seuil bas TI, par exemple à 150mV, le nombre d'étages de pompe activés N est modifié dans une étape E2' en augmentant ledit nombre d'étages de pompe activé, par exemple d'un étage de pompe activé, c'est à dire N=N+1.

La comparaison de la différence entre Vcp et Vldo avec le seuil bas peut être réalisée par un premier comparateur A1' qui reçoit en entrée Vcp, Vldo ainsi que le seuil bas TI. A titre d'exemple, un amplificateur de différence différentiel ou DDA (differential difference amplifier) peut être utilisé comme comparateur. Dans ce cas, l'équation donnant la tension de sortie VCMP1', si les quatre entrées sont respectivement aux tensions Vcp, 2TI, Vldo et TI, est la suivante :

$$VCMP1' = A1'[(Vcp-2*TI)-(Vldo-TI)]$$

On en déduit :

$$VCMP1' = A1'[(Vcp-Vldo-TI)]$$

Soit une de Vcp-Vldo par rapport à TI, avec A1' le gain du comparateur.

Si ladite différence entre Vcp et Vldo est supérieure au seuil haut Th, par exemple à 200mV, on calcule dans une étape E3' un résultat de nombre d'étages inférieur (ou résultat de prédiction) qui correspond à une différence entre une tension de sortie de l'étage N-1 de la pompe de charge V$_{CPN-1}$ (ou tension de nombre d'étages inférieur qui correspond à la tension de prédiction ) et la tension de sortie de régulateur Vldo.

Si la différence entre V$_{CPN-1}$ et Vldo est supérieure au seuil bas Tl, par exemple à 150mV, le dispositif d'activation 4 modifie dans une étape E4' le nombre d'étages de pompe activés N en diminuant ledit nombre d'étages de pompe activé, par exemple d'un étage de pompe activé, c'est à dire N=N-1.

La comparaison de la différence entre Vcp et Vldo avec le seuil haut Th peut être réalisée par un deuxième comparateur A2' qui reçoit en entrée Vcp, Vldo ainsi que le seuil haut Th. A titre d'exemple, un amplificateur de différence différentiel ou DDA (differential difference amplifier) peut être utilisé comme comparateur. Dans ce cas, l'équation donnant la tension de sortie VCMP2, si les quatre entrées sont respectivement aux tensions Vcp, 2Th, Vldo et Th :

$$VCMP2' = A2'[(Vcp-2*Th)-(Vldo-Th)]$$

On en déduit :

$$VCMP2'=A2'[(Vcp-Vldo-Th)]$$

Soit une mesure de Vcp-Vldo par rapport à Th, avec A2' le gain du comparateur.

La comparaison de la différence entre V$_{CPN-1}$ et Vldo avec le seuil bas Tl peut être réalisée par un troisième comparateur A3' qui reçoit en entrée V$_{CPN-1}$, Vldo ainsi que le seuil bas Tl. A titre d'exemple, un amplificateur de différence différentiel ou DDA (differential difference amplifier) peut être utilisé comme comparateur. Dans ce cas, l'équation donnant la tension de sortie VCMP3', si les quatre entrées sont respectivement aux tensions V$_{cpN-1}$, 2Tl, Vldo et Tl :

$$VCMP3' = A3'[(V_{CPN-1} - 2*Tl)-(Vldo-Tl)]$$

On en déduit :

$$VCMP3'=A3'[(V_{CPN-1} - Vldo-Tl)]$$

Soit une mesure de VcpN1-Vldo par rapport à Tl, avec A3' le gain du comparateur.

Dans le cas où ladite différence entre Vcp et Vldo est comprise entre le seuil bas Tl et le seuil haut Th, on maintient inchangé le nombre d'étages N de pompe activé. La pompe de charge 1' garde dans ce cas la configuration de pompe courante.

Les tensions de sortie des comparateurs VCMP1', VCMP2', VCMP3' peuvent être considérées comme un signal binaire, respectivement CMP1', CMP2', CMP3', prenant une valeur 1 si la valeur de tension est positive, 0 si la valeur est négative ce qui permet de mettre en oeuvre le procédé exposé ci-dessus de façon simple.

Ainsi, si les signaux de comparaison CMP1', CMP2' et CMP3' ont tous la valeur 1, alors on diminue le nombre d'étage de pompe activé d'un étage activé. Si les signaux de comparaison CMP1', CMP2' et CMP3' ont tous la valeur 0, alors on augmente le nombre d'étage de pompe activé d'un étage activé. Dans tous les autres cas, on maintient inchangé le nombre N d'étage de pompe activés.

**Revendications**

1. Système de pompe de charge (100) comprenant :

- une pompe de charge (1) connectée entre une borne d'entrée (IN) et une borne de référence (GND) à une alimentation d'entrée externe au système de pompe de charge (100) pour recevoir une tension d'alimentation d'entrée (Vin) et pour générer, en fonction de la tension d'alimentation d'entrée (Vin), en sortie de la pompe de charge (1) entre une borne de sortie (OUT) et la borne de référence (GND), une tension de sortie de pompe (Vcp), la pompe de charge (1) comprenant un nombre Nmax d'étages de pompe (Si), et chaque étage de pompe (Si) étant configuré pour être activé ou désactivé, le nombre d'étage N de pompe (Si) activé étant compris entre 0 et Nmax,
- un régulateur de tension (LDO) connecté à la pompe de charge (1) entre la borne de sortie (OUT) et la borne de référence (GND), et configuré pour recevoir la tension de sortie de pompe (Vcp) en entrée dudit régulateur de tension (LDO) et pour générer, sur la base de la tension de sortie de pompe (Vcp), une tension de sortie de régulateur (Vldo),
- un dispositif d'activation configuré pour :

- obtenir un résultat de prédiction correspondant à une différence entre une tension de prédiction (Vcp+1, $V_{CPN-1}$) représentative d'une modification du nombre d'étages de pompe (Si) activés et la tension de sortie de régulateur (Vldo),
- modifier ou non le nombre d'étages N de pompe (Si) activés en fonction du résultat de prédiction obtenu, de sorte à modifier ou non la tension de sortie de pompe (Vcp) pour que la différence entre la tension de sortie de pompe (Vcp) et la tension de sortie de régulateur (Vldo) soit régulée et comprise dans une gamme de tension de fonctionnement prédéfinie.

2.  Système de pompe de charge (100) selon la revendication 1, dans lequel la pompe de charge est de type abaisseuse, comprenant en outre un circuit de prédiction (2) configuré pour générer ladite tension de prédiction (Vcp+1) en sortie du circuit de prédiction (2).

3.  Système de pompe de charge (100) selon la revendication 2, dans lequel la tension de prédiction (Vcp+1) est représentative d'une modification du nombre d'étages de pompe (Si) activés correspondant à un nombre d'étages supérieur à un nombre d'étage activé courant de la pompe de charge.

4.  Système de pompe de charge (100) selon l'une quelconque des revendications 2 à 3, dans lequel chaque étage de pompe (Si) est configuré pour recevoir en entrée une tension intermédiaire d'entrée (Vfi) et pour générer en sortie dudit étage de pompe, sur la base de la tension intermédiaire d'entrée (Vfi), une tension intermédiaire de sortie (Vsi), le circuit de prédiction (2) est configuré pour prélever une pluralité de tensions intermédiaires d'entrée (Vfi) ou de sortie (Vsi), et le circuit de prédiction (2) comprend :

- un multiplexeur (MUX) configuré pour sélectionner une tension intermédiaire d'entrée (Vfi) parmi les tensions intermédiaires d'entrée (Vfi) prélevées,
- au moins un étage de modification (Mi) configuré pour générer une tension de prédiction (Vcp+1) sur la base de la tension intermédiaire sélectionnée (Vfi), l'au moins un étage de modification (Mi) étant configuré pour présenter un structure identique à un étage de pompe ($S_i$) de la pompe de charge (1).

5.  Système de pompe de charge (100) selon l'une quelconque des revendications 2 à 3, dans lequel chaque étage de pompe (Si) est configuré pour recevoir en entrée une tension intermédiaire d'entrée (Vfi) et pour générer en sortie dudit étage de pompe, sur la base de la tension intermédiaire d'entrée (Vfi), une tension intermédiaire de sortie (Vsi), le circuit de prédiction (2) comprenant :

- un pont diviseur de tension résistif connecté entre une première borne choisie entre la borne de sortie (OUT) et la borne d'entrée (IN) et une deuxième borne correspondant à la borne de référence (GND),
le pont diviseur de tension résistif comprenant une pluralité de composants résistifs (Ri), chaque composant résistif (Ri) étant configuré de sorte que la tension aux bornes de chaque composant résistif corresponde à la tension intermédiaire d'entrée (Vfi) ou la tension intermédiaire de sortie (Vfi) de l'étage de pompe (Si) correspondant,
- un multiplexeur (MUX) connecté aux bornes d'au moins un composant résistif de la pluralité de composants résistifs (Ri) et configuré pour sélectionner une tension parmi les tensions aux bornes des composants résistifs, la tension sélectionnée correspondant à la tension de prédiction (Vcp+1).

6.  Système de pompe de charge (100) selon la revendication 5 dans lequel chaque composant résistif (Ri) présente entre les bornes dudit composant résistif (Ri) une valeur de résistance définie en fonction du nombre d'étage(s) de pompe activé(s).

7.  Système de pompe de charge (100) selon l'une des revendications 2 à 6, dans lequel ladite pompe de charge est de type abaisseuse, et dans lequel le dispositif d'activation est configuré pour :

- mesurer une première différence de tension entre la tension courante de sortie de pompe (Vcp) et la tension de sortie de régulateur (Vldo),
- si ladite première différence est inférieure à un seuil bas (Tl), modifier (E2) le nombre d'étages de pompe activé en réduisant ledit nombre d'étages de pompe activés N,
- - si ladite première différence est supérieure à un seuil haut (Th) obtenir ledit résultat de prédiction correspondant à une deuxième différence entre la tension de prédiction (Vcp+1) et la tension de sortie de régulateur (Vldo), et si le résultat de prédiction est supérieur au seuil bas (TI), modifier le nombre d'étages de pompe activé en augmentant ledit nombre d'étages de pompe activé et

- maintenir inchangé le nombre d'étages de pompe activés N si la première différence est comprise entre le seuil bas (TI) et le seuil haut (Th).

8. Système de pompe de charge (100) selon la revendication 1, dans lequel ladite pompe de charge est de type élévatrice, et dans lequel la tension de prédiction est une tension de nombre d'étages inférieur ($V_{CPN-1}$) représentative d'une modification du nombre d'étages de pompe (Si) activés correspondant à un nombre d'étages inférieur à un nombre d'étage activé courant de la pompe de charge, le résultat de prédiction correspondant à un résultat de nombre d'étages inférieur.

9. Système de pompe de charge (100) selon la revendication 8, dans lequel le dispositif d'activation est configuré pour :

- mesurer une première différence de tension entre la tension courante de sortie de pompe (Vcp) et la tension de sortie de régulateur (Vldo),
- si ladite première différence est inférieure à un seuil bas (TI), modifier le nombre d'étages de pompe activé en augmentant ledit nombre d'étages de pompe activés N,),
- si ladite première différence est supérieure à un seuil haut (Th) obtenir une tension de nombre d'étages inférieur ($V_{CPN-1}$), et obtenir un résultat prédiction pour un nombre d'étage inférieur correspondant à une deuxième différence entre une tension de nombre d'étages inférieur ($V_{CPN-1}$) et la tension de sortie de régulateur (Vldo), et, si le résultat de prédiction est supérieur au seuil bas (TI), modifier le nombre d'étages de pompe activé en diminuant ledit nombre d'étages de pompe activé,

maintenir inchangé le nombre d'étages de pompe activés N si ladite première différence est comprise entre le seuil bas et le seuil haut.

10. Système de pompe de charge (100) selon l'une des revendications précédentes dans lequel le dispositif d'activation comprend un ensemble de comparateurs (A1, A2, A3, A1', A2', A3') comprenant:

- Un premier comparateur (A1, A1') configuré pour recevoir en entrée la tension de sortie de pompe (Vcp), la tension de sortie de régulateur (Vldo) ainsi que le seuil bas (TI) et pour comparer la différence entre la tension de sortie de pompe (Vcp) et la tension de sortie de régulateur (Vldo) avec le seuil bas (TI),
- Un deuxième comparateur (A2, A2') configuré pour recevoir en entrée la tension de sortie de pompe (Vcp), la tension de sortie de régulateur (Vldo) ainsi que le seuil haut (Th) et pour comparer la différence entre la tension de sortie de pompe (Vcp) et la tension de sortie de régulateur (Vldo) avec le seuil haut (Th), et
- Un troisième comparateur (A3, A3') configuré pour recevoir en entrée la tension de prévision (Vcp+1, $V_{CPN-1}$), la tension de sortie de régulateur (Vldo) ainsi que le seuil bas (TI) et pour comparer la différence entre la tension de prédiction (Vcp+1, $V_{CPN-1}$) et la tension de sortie de régulateur (Vldo) avec le seuil bas (TI).

11. Système de pompe de charge (100) selon l'une des revendications précédentes dans lequel chaque étage de pompe (Si) de rang i comprend un composant capacitif (Cfly) comprenant une première électrode reliée d'une part à une entrée de l'étage de pompe (Si), et d'autre part reliée par un premier commutateur (Int1-i) à l'entrée de l'étage de pompe (Si+1) de rang i+1 ou la tension de sortie ; et une deuxième électrode reliée d'une part par un deuxième interrupteur (Int2-i) à la borne de sortie (VOUT) et d'autre part par un troisième commutateur Int3-i à la borne de référence (GND).

12. Système de pompe de charge (100) selon l'une des revendications précédentes comprenant en outre un microsystème électromécanique (Rmems) connecté en sortie du régulateur de tension (LDO) entre la borne de référence (GND) et une borne de sortie du régulateur (X).

13. Procédé de configuration d'un nombre d'étages de pompe activé pour un système de pompe de charge (100) comprenant :

- une pompe de charge (1) connectée entre une borne d'entrée (IN) et une borne de référence (GND) à une alimentation d'entrée externe au système de pompe de charge (100) pour recevoir une tension d'alimentation d'entrée (Vin) et pour générer, en fonction de la tension d'alimentation d'entrée (Vin), en sortie de la pompe de charge (1) entre une borne de sortie (OUT) et la borne de référence (GND), une tension de sortie de pompe (Vcp), la pompe de charge (1) comprenant un nombre Nmax d'étages de pompe (Si), et chaque étage de pompe (Si) étant configuré pour être activé ou désactivé, le nombre d'étage N de pompe (Si) activé étant compris entre 0 et Nmax,

- un régulateur de tension (LDO) connecté à la pompe de charge (1) entre la borne de sortie (OUT) et la borne de référence (GND), et configuré pour recevoir la tension de sortie de pompe (Vcp) en entrée dudit régulateur de tension (LDO) et pour générer, sur la base de la tension de sortie de pompe (Vcp), une tension de sortie de régulateur (Vldo),

le procédé comprenant les étapes suivantes :

- mesure (E1, E1') d'une première différence de tension entre la tension de sortie de pompe (Vcp) et la tension de sortie de régulateur (Vldo),
- si ladite première différence est inférieure à un seuil bas (Tl), opérer (E2, E2') une première modification du nombre d'étages de pompe activé,
- si ladite première différence est supérieure à seuil haut (Th), générer ou obtenir une tension de prédiction (Vcp+1, $V_{CPN-1}$) représentative d'une modification du nombre d'étages de pompe (Si) activés, et obtenir un résultat de prédiction correspondant à une deuxième différence entre la tension de prédiction (Vcp+1, $V_{CPN-1}$) et la tension de sortie de régulateur (Vldo), et, si le résultat de prédiction est supérieur au seuil bas (Tl), opérer une deuxième modification (E4, E4') du nombre d'étages de pompe activés, les première et deuxième modifications correspondant respectivement à une augmentation ou à une réduction, ou inversement,
- si ladite différence est comprise entre le seuil bas et le seuil haut, maintenir inchangé le nombre d'étages de pompe activés N.

**14.** Procédé selon la revendication 15, dans lequel ladite pompe de charge est de type abaisseuse, et dans lequel :

- la première modification est une réduction du nombre d'étages activés,
- la deuxième modification est une augmentation du nombre d'étages de pompe activés,
- la tension de prédiction (Vcp+1) est obtenu par un circuit de prédiction (2).

**15.** Procédé selon la revendication 15, dans lequel ladite pompe de charge est de type élévatrice, et dans lequel :

- la première modification est une augmentation du nombre d'étages activés,
- la deuxième modification est une réduction du nombre d'étages de pompe activés,
- la tension de prédiction correspond à une tension d'un nombre d'étages inférieur ($V_{CPN-1}$).

FIG. 1

FIG. 2

FIG. 3

FIG. 4

FIG. 5

EP 4 742 520 A1

E1

VCP-VLDO

> Th          < Tl

E3                              E2

Vcp+1-Vldo > Tl        N=N-1

E4

N=N+1

# FIG. 6

Vref

0,45
0,4
0,35
0,3
0,25
0,2
0,15
0,1
0,05
0

-40          0          70          120          T

# FIG. 7

FIG. 8

FIG. 9

FIG. 10

FIG. 11

Europäisches Patentamt

European Patent Office

Office européen des brevets

# RAPPORT DE RECHERCHE EUROPEENNE

Numéro de la demande

**EP 25 21 4268**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2003/184361 A1 (TANIMOTO TAKASHI [JP]) 2 octobre 2003 (2003-10-02) | 1-3,5-15 | INV. H02M1/00 H02M3/07 |
| A | * alinéa [0008] - alinéa [0041] * <br> * alinéa [0055] * <br> * figures 2-4 * <br> ----- | 4 | |
| A | US 2008/100272 A1 (YOSHIO KATSURA [JP]) 1 mai 2008 (2008-05-01) <br> * alinéa [0010] * <br> * alinéa [0053] - alinéa [0134] * <br> * alinéa [0130] - alinéa [0152] * <br> * figures 4,7,8 * <br> ----- | 1-15 | |
| A | JP 2010 148263 A (SANYO ELECTRIC CO; SANYO SEMICONDUCTOR CO LTD) 1 juillet 2010 (2010-07-01) <br> * alinéas [0012], [0018], [0019] * <br> * figure 1 * <br> ----- | 1-15 | |

**DOMAINES TECHNIQUES RECHERCHES (IPC)**

H02M

Le présent rapport a été établi pour toutes les revendications

| Lieu de la recherche | Date d'achèvement de la recherche | Examinateur |
|---|---|---|
| La Haye | 6 mars 2026 | Lochhead, Steven |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 25 21 4268

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

06-03-2026

| Document brevet cité au rapport de recherche | Date de publication | Membre(s) de la famille de brevet(s) | | Date de publication |
|---|---|---|---|---|
| US 2003184361 A1 | 02-10-2003 | CN | 1447503 A | 08-10-2003 |
| | | JP | 4222768 B2 | 12-02-2009 |
| | | JP | 2003289663 A | 10-10-2003 |
| | | KR | 20030078010 A | 04-10-2003 |
| | | TW | 591864 B | 11-06-2004 |
| | | US | 2003184361 A1 | 02-10-2003 |
| US 2008100272 A1 | 01-05-2008 | JP | 4311687 B2 | 12-08-2009 |
| | | JP | 2008099370 A | 24-04-2008 |
| | | US | 2008100272 A1 | 01-05-2008 |
| JP 2010148263 A | 01-07-2010 | AUCUN | | |

EPO FORM P0460

Pour tout renseignement concernant cette annexe : voir Journal Officiel de l'Office européen des brevets, No.12/82